(19) **Europäisches Patentamt**

**European Patent Office**

**Office européen des brevets**

(11) **EP 1 320 697 B1**

(12) **EUROPÄISCHE PATENTSCHRIFT**

(45) Veröffentlichungstag und Bekanntmachung des Hinweises auf die Patenterteilung:
**11.01.2006 Patentblatt 2006/02**

(21) Anmeldenummer: **01974008.3**

(22) Anmeldetag: **05.09.2001**

(51) Int Cl.:
**F16H 61/14** (2006.01)

(86) Internationale Anmeldenummer:
**PCT/DE2001/003395**

(87) Internationale Veröffentlichungsnummer:
**WO 2002/023066 (21.03.2002 Gazette 2002/12)**

(54) **VERFAHREN UND EINRICHTUNG ZUM BETRIEB EINER KUPPLUNG**

METHOD AND DEVICE FOR OPERATING A CLUTCH

PROCEDE ET DISPOSITIF D'EXPLOITATION D'UN EMBRAYAGE

(84) Benannte Vertragsstaaten:
**BE DE GB**

(30) Priorität: **15.09.2000 DE 10045758**

(43) Veröffentlichungstag der Anmeldung:
**25.06.2003 Patentblatt 2003/26**

(73) Patentinhaber: **ROBERT BOSCH GMBH**
**70442 Stuttgart (DE)**

(72) Erfinder:
• **SENGER, Karl-Heinz**
**48331 Farmington Hills (US)**
• **BAEUERLE, Peter**
**71636 Ludwigsburg (DE)**
• **VEENHUIZEN, Bram**
**NL-5051 ED Goirle (NL)**
• **SPIJKER, Engbert**
**NL-5702 LG Helmond (NL)**
• **VAN SPIJK, Gert-Jan**
**NL-5151 VT Drunen (NL)**

(56) Entgegenhaltungen:
DE-A- 19 851 341        GB-A- 2 286 437
US-A- 4 072 220         US-A- 5 322 150
US-A- 5 403 250

**Beschreibung**

Die Erfindung betrifft ein Verfahren und eine Einrichtung zum Betrieb einer Kupplung zwischen einem Verbrennungsmotor und zumindest einem Antriebsrad eines Fahrzeugs, wobei durch Zusammenpressen der Kupplung mit einer Anpreßkraft oder einem Anpreßdruck ein Moment zwischen dem Verbrennungsmotor und dem Antriebsrad übertragen wird.

Wird eine Kupplung schlupfend betrieben, so können bei bekanntem Reibkoeffizient des Kupplungsbelags Rückschlüsse auf das übertragene Kupplungsmoment gezogen werden. Diese Momenteninformation soll zur Bestimmung des Getriebeeingangsmoments herangezogen werden. Eine genaue Erfassung des Getriebeeingangsmoments ist insbesondere bei stufenlosen Automatikgetrieben (CVT) von Bedeutung, damit der Sicherheitsdruck bei der Bandspannungsregelung von Umschlingungsgetrieben reduziert und der Getriebewirkungsgrad erhöht werden kann.

Die US 5 403 250 offenbart ein Verfahren zum Betrieb einer Kupplung zwischen einem Verbrennungsmotor und einem Antriebsrad eines Fahrzeugs, bei dem durch Zusammenpressen der Kupplung ein Moment zwischen dem Verbrennungsmotor und dem Antriebsrad übertragen wird und der Anpressdruck der Kupplung in Abhängigkeit von einer gemessen Temperatur der Kupplung gesteuert oder geregelt wird. In Abhängigkeit von der gemessenen Temperatur der Kupplung und vom Sollwert für den Kupplungsschlupf wird aus einem Diagramm ein Wert für den Reibungskoeffizienten der Kupplung abgelesen.

Aus der US 4 072 220 ist eine Steuervorrichtung zur Betätigung einer Reibungskupplung in einem Kraftfahrzeug bekannt, bei der ein Kupplungssteller in Abhängigkeit von einer Drosselklappenstellung betätigt wird. Die Steuervorrichtung ist mit einem Temperatur-Sensor verbunden, der ein Wachsmaterial aufweist, das sich bei Erwärmung der Kupplung ausdehnt und einen mit der Steuervorrichtung elektrisch verbundenen Schalter betätigt.

Die DE 198 51 341 A1 offenbart ein Verfahren zur Differenzdrehzahlregelung einer Kupplung, bei dem eine Solldrehzahldifferenz zwischen Eingangs- und Ausgangsseite der Kupplung als Führungsgröße und die aktuelle Drehzahlgröße als Regelgröße zur Regelung des Kupplungsschlupfes verwandt wird. Aus der Getriebeöltemperatur wird in Verbindung mit einem mathematisch-physikalischem Modell des Wärmeeintrags im Schlupfbetrieb der Reibschlussverbindung eine Temperaturüberwachung der Reibschlussverbindung durchgeführt, um eine Beschädigung der Kupplungsbeläge zu vermeiden.

Es ist Aufgabe der Erfindung, den Betrieb einer Kupplung zu verbessern.

Diese Aufgabe wird durch ein Verfahren bzw. eine Einrichtung zum Betrieb einer Kupplung zwischen einem Verbrennungsmotor und zumindest einem Antriebsrad eines Fahrzeugs, wobei durch Zusammenpressen der Kupplung mit einer Anpresskraft oder einem Anpressdruck ein Moment zwischen dem Verbrennungsmotor und dem Antriebsrad übertragen wird, gemäß Anspruch 1 bzw. gemäß Anspruch 6 gelöst, indem die Anpresskraft oder der Anpressdruck in Abhängigkeit von einer Temperatur einer Reibfläche der Kupplung gesteuert oder geregelt wird, wobei die Temperatur der Reibfläche der Kupplung mittels eines Temperaturmodels berechnet wird, in dem eine mathematische Beziehung zwischen der zu berechnenden Temperatur der Reibfläche der Kupplung und anderen Parametern, insbesondere einer erfassten Temperatur von Öl zur Schmierung oder Kühlung der Kupplung implementiert ist.

In vorteilhafter Ausgestaltung der Erfindung wird das zu übertragende Moment zwischen dem Verbrennungsmotor und dem Antriebsrad um einen vorgegebenen Wert erhöht, wenn die Temperatur einer Reibfläche der Kupplung über einem Schwellenwert liegt.

In weiterhin vorteilhafter Ausgestaltung der Erfindung wird die Anpreßkraft oder der Anpreßdruck in Abhängigkeit eines Kupplungsschlupfes in der Kupplung bei Übertragung des Momentes zwischen dem Verbrennungsmotor und dem Antriebsrad und einem Soll-Kupplungsschlupf geregelt, insbesondere wenn die Temperatur einer Reibfläche der Kupplung kleiner oder gleich dem Schwellenwert ist.

In weiterhin vorteilhafter Ausgestaltung der Erfindung wird die Anpreßkraft oder der Anpreßdruck in Abhängigkeit der Differenz zwischen dem Kupplungsschlupf und dem Soll-Kupplungsschlupf geregelt, insbesondere wenn die Temperatur einer Reibfläche der Kupplung kleiner oder gleich dem Schwellenwert ist.

In weiterhin vorteilhafter Ausgestaltung der Erfindung wird die Anpreßkraft oder der Anpreßdruck mittels eines inversen Kupplungsmodells geregelt, das die Anpreßkraft oder den Anpreßdruck in Abhängigkeit des über die Kupplung übertragenen Momentes errechnet.

Die erfindungsgemäße Einrichtung zum Betrieb einer Kupplung zwischen einem Verbrennungsmotor und zumindest einem Antriebsrad eines Fahrzeugs, wobei durch Zusammenpressen der Kupplung mit einer Anpreßkraft oder einem Anpreßdruck ein Moment zwischen dem Verbrennungsmotor und dem Antriebsrad übertragen wird, weist einen Druckregler zur Steuerung oder Regelung der Anpreßkraft oder des Anpreßdrucks in Abhängigkeit der Temperatur einer Reibfläche der Kupplung auf, wobei

Mittel zur Bestimmung der Temperatur einer Reibfläche der Kupplung mittels eines Temperaturmodells, in dem eine mathematische Beziehung zwischen der Temperatur der Reibfläche und anderen erfassten Parametern implementiert ist, vorgesehen sind.

In weiterhin vorteilhafter Ausgestaltung der Erfindung weißt der Druckregler einen Regler zur Regelung der Anpreßkraft oder des Anpreßdrucks in Abhängigkeit eines Kupplungsschlupfes in der Kupplung bei Übertragung des Momentes zwischen dem Verbrennungsmotor und dem Antriebsrad und einem Soll-Kupplungsschlupf auf.

In weiterhin vorteilhafter Ausgestaltung der Erfindung weißt der Druckregler ein inverses Kupplungsmodell zur Errechnung der Anpreßkraft oder des Anpreßdrucks in Abhängigkeit des über die Kupplung übertragenen Momentes auf.

In weiterhin vorteilhafter Ausgestaltung der Erfindung ist der Reibkoeffizient der Kupplung ein Parameter des inversen Kupplungsmodells.

In weiterhin vorteilhafter Ausgestaltung der Erfindung ist ein Adaptierer zur Adaption des Reibkoeffizienten der Kupplung vorgesehen.

Weitere Einzelheiten und Vorteile ergeben sich aus nachfolgender Beschreibung von Ausführungsbeispielen. Im einzelnen zeigen:

Fig. 1     ein Antriebsaggregat für ein Kraftfahrzeug
Fig. 2     eine Kupplung
Fig. 3     eine Kupplungssteuerung
Fig. 4     einen Druckregler
Fig. 5     einen Ablaufplan
Fig. 6     eine Kennlinie
Fig. 7     einen Ablaufplan
Fig. 8     eine Reibkoeffizient-Schlupf-Kennline
Fig. 9     einen Ablaufplan
Fig. 10    eine Erläuterung des Ablaufplans gemäß Fig. 4
Fig. 11    eine Erläuterung des Ablaufplans gemäß Fig. 6

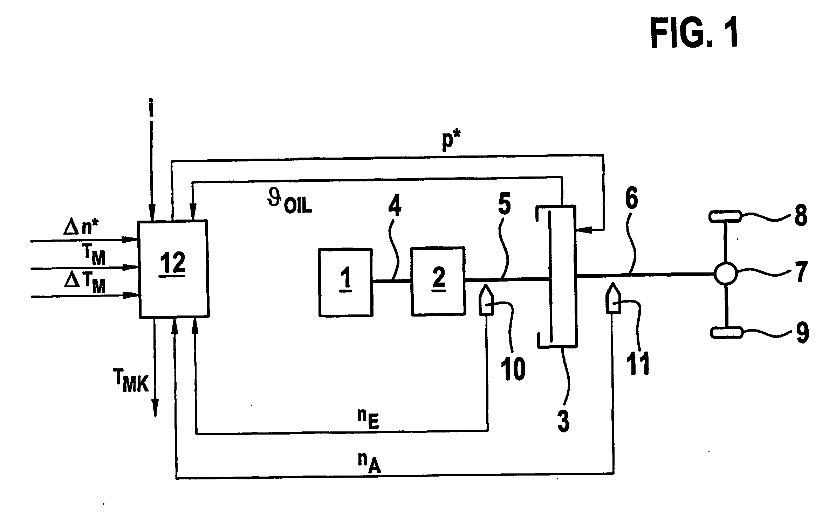

Fig. 1 zeigt ein Antriebsaggregat für ein Kraftfahrzeug. Dabei bezeichnet Bezugszeichen 1 einen Verbrennungsmotor, der über eine Welle 4 mit einem Automatikgetriebe 2 verbunden ist. Das Automatikgetriebe 2 ist im besonders vorteilhafter Weise als stufenloses Umschlingungsgetriebe ausgebildet. Das Automatikgetriebe 2 ist über eine Kupplungs-Eingangswelle 5, eine Kupplung 3, eine Kupplungs-Ausgangswelle 6, ein Differential 7 mit Antriebsrädern 8, 9 zum Antrieb des Kraftfahrzeugs verbunden. Durch Zusammenpressen der Kupplung 3 mit einem Anpreßdruck p ist das über die Kupplung 3 übertragende Moment einstellbar. Zur Einstellung des über die Kupplung 3 übertragenden Moments ist eine Kupplungsteuerung 12 vorgesehen, die durch Vorgabe eines Soll-Anpreßdrucks p* den Anpreßdruck in der Kupplung 3 einstellt. Der Anpreßdruck ist synonym für eine Anpreßkraft mit der die Kupplung 3 zusammengepreßt wird.

Eingangsgrößen in die Kupplungssteuerung 12 sind die Drehzahl $n_E$ der Kupplungs-Eingangswelle 5, die mittels eines Drehzahlsensors 10 gemessen wird, die Drehzahl $n_A$ der Kupplungs-Ausgangswelle 6, die mit einem Drehzahlsensor 11 gemessen wird, die Übersetzung i des Automatikgetriebes 2, eine Öltemperatur $\vartheta_{OIL}$ der Kupplung 3 und ein Sollwert $\Delta n^*$ für den Kupplungsschlupf der Kupplung 3 (Soll-Kupplungsschlupf) sowie optional das Moment $T_M$ des Verbrennungsmotors 1 sowie Information $\Delta T_M$ über die Ungenauigkeit der Information über das Moment $T_M$ des Verbrennungsmotors 1. Der Kupplungsschlupf $\Delta n$ ist definiert als

$$\Delta n = n_E - n_A$$

Das Moment $T_M$ des Verbrennungsmotors 1 sowie die Information $\Delta T_M$ über die Ungenauigkeit der Information über das Moment $T_M$ des Verbrennungsmotors 1 werden zum Beispiel von einer nicht dargestellten Motorsteuerung bereitgestellt.

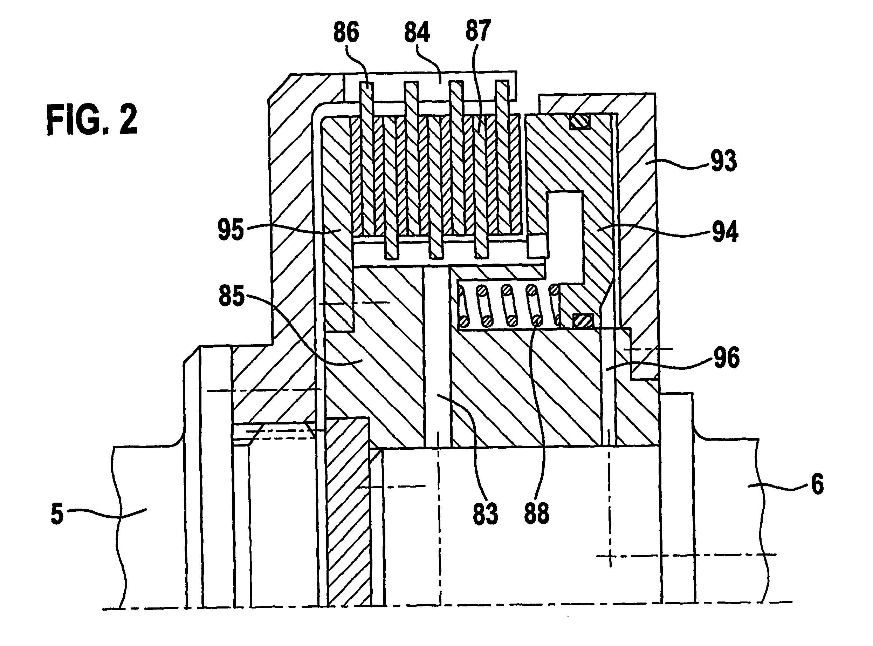

Fig. 2 zeigt eine Kupplung 3 in beispielhafter Ausgestaltung. Dabei bezeichnet Bezugszeichen 83 eine Schmierölzuführung für Hydrauliköl, Bezugszeichen 84 einen Außenmitnehmer, Bezugszeichen 85 einen Innenmitnehmer, Bezugszeichen 86 eine Außenlamelle, Bezugszeichen 87 eine Innenlamelle, Bezugszeichen 88 eine Rückholfeder, Bezugszeichen 93 einen Zylinder, Bezugszeichen 94 einen Kolben, Bezugszeichen 95 eine Druckplatte und Bezugszeichen 96 eine Druckmittelzuführung. Am Außenmitnehmer 84, welcher mit der Kupplungs-Eingangswelle 5 verbunden ist, sind Außenlamellen 86, in vorteilhafter Ausgestaltung Stahllamellen ohne Reibbelag, angeordnet. Der mit der Kupplungs-Ausgangswelle 6 verbundene Innenmitnehmer 85 nimmt die Innenlamellen 87 auf, die mit einem Reibbelag beschichtet sind. Bei Einleitung von Hydrauliköl mit einem definierten Druckniveau über die Druckmittelzuführung 96 in den Zylinder 93 bewegt sich der Kolben 94 gegen die Kraft der Rückholfeder 88 in Richtung der Druckplatte 95 und drückt das Lamellenpaket, daß aus Innen- und Außenlamellen 87 und 86 besteht, zusammen. Zur Kühlung des Lamellenpakets wird über die Schmierölzuführung 83 Hydrauliköl zu den Innen- und Außenlamellen 87 und 86 geleitet. Die Temperatur des Schmieröls wird der Kupplungssteuerung 12 als Öltemperatur $\vartheta_{OIL}$ zugeführt.

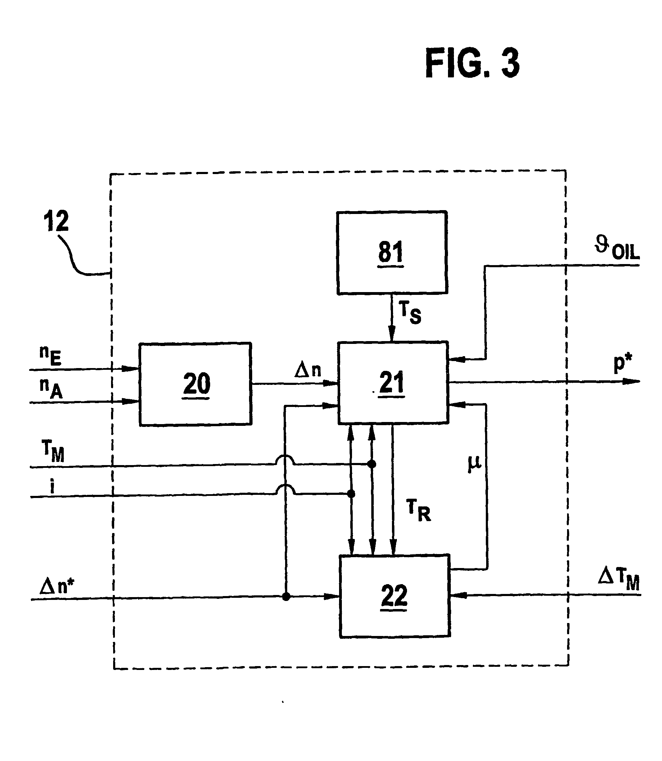

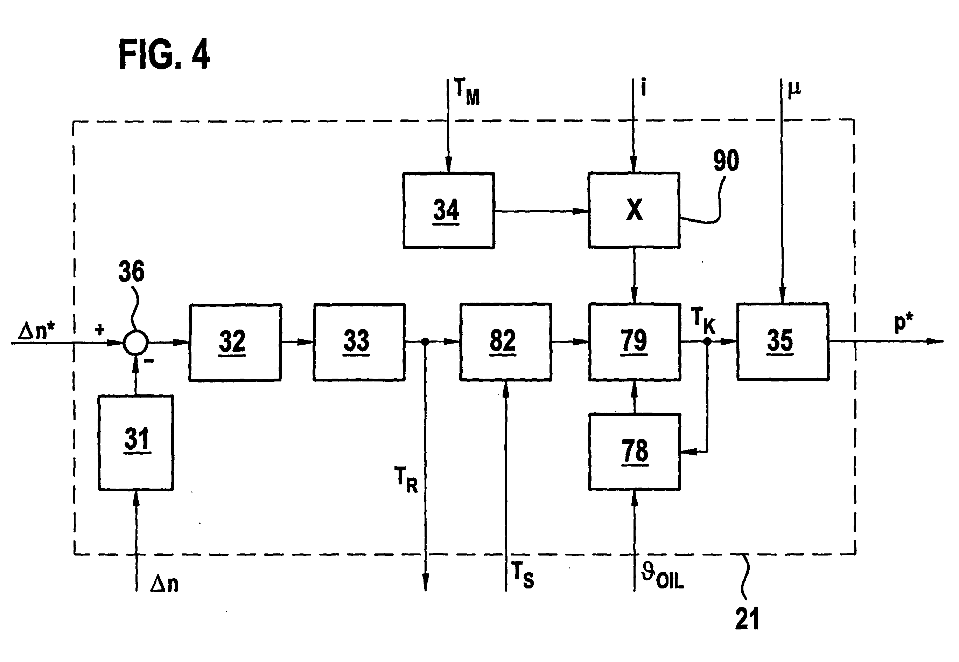

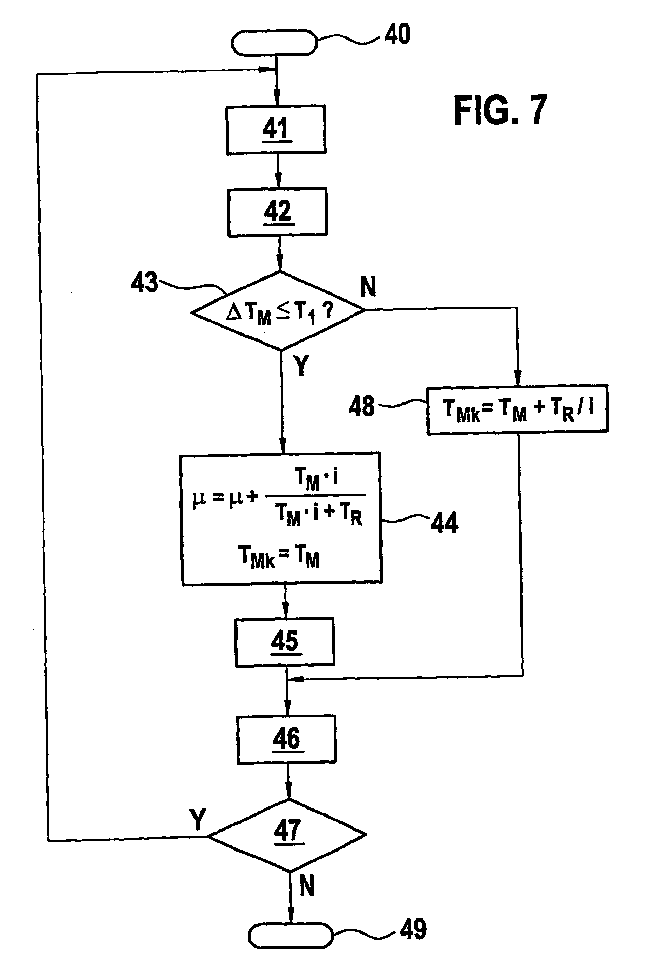

Fig. 3 zeigt die Kupplungssteuerung 12. Sie weist einen Differenzbildner 20 und einen Druckregler 21 sowie optional einen Adaptierer 22 und/oder eine Schutzeinrichtung 81 auf. Der Druckregler 21 ist in Fig. 4 und der Adaptierer in Fig. 7 näher erläutert. Der Differenzbildner 20 ermittelt den Kupplungsschlupf $\Delta n$, der Eingangsgröße in den Druckregler 21 ist. Weitere Eingangsgrößen des Druckreglers 21 sind der Soll-Kupplungsschlupf $\Delta n^*$, das Motormoment $T_M$, die Übersetzung i des Automatikgetriebes 2 und der Reibkoeffizient $\mu$. Der Reibkoeffizient $\mu$ wird mittels des Adaptierers 22 gebildet. Eingangsgrößen in den optionalen Adaptierer 22 sind der Soll-Kupplungsschlupf $\Delta n^*$, die Übersetzung i des Automatikgetriebes 2, das Moment $T_M$ des Verbrennungsmotors 1, Information $\Delta T_M$ über die Ungenauigkeit der Information über das Moment $T_M$ des Verbrennungsmotors 1 sowie ein Differenzmoment $T_R$, das vom Druckregler 21 gebildet wird. Neben dem Reibkoeffizient $\mu$ ist ein korrigiertes Motormoment $T_{MK}$ eine weitere Ausgangsgröße des Adaptierers 22. Der Druckregler 21 bildet ferner den Soll-Anpreßdruck $p^*$.

Die Kupplungssteuerung 12 weist optional eine Schutzeinrichtung 81 zum Schutz des Antriebsaggregats, insbesondere des Automatikgetriebes 2, vor Drehmomentstößen auf. Ausgangsgröße der Schutzeinrichtung 81 ist ein Stoßmoment $T_S$. Das Stoßmoment $T_S$ errechnet sich in vorteilhafter Ausgestaltung gemäß

$$T_s = T_c - \sum_l J_l \cdot \frac{2\pi \cdot \Delta n_{max}}{\Delta t}$$

Dabei ist

$J_1$      das Trägheitsmoment einer 1-ten Komponente des Antriebsaggregats auf der Seite der Kupplung 3, auf der der Verbrennungsmotor 1 angeordnet ist.

$\Delta n_{max}$      der maximal zulässige Kupplungsschlupf

$T_c$      ein konstantes Moment

$\Delta t$      die Zeitdauer, in der ein Momentenstoß zu einer Erhöhung des Schlupfes führt.

Ist die Schlupfdauer $\Delta t$ von untergeordneter Bedeutung, so kann das Stoßmoment $T_S$ gleich dem konstanten Moment $T_c$ gesetzt werden.

In vorteilhafter Ausgestaltung ist vorgesehen, das Stoßmoment $T_S$ an eine Getriebesteuerung zu übertragen, so daß z.B. der Anpreßdruck in einem Umschlingungsgetriebe entsprechend erhöht werden kann. Der erforderliche Anpreßdruck im Umschlingungsgetriebe ist in Abhängigkeit des Stoßmoments $T_S$ anzuheben.

Fig. 4 zeigt den inneren Aufbau des Druckreglers 21. Der Druckregler 21 weist einen Filter 31 zur Filterung des Kupplungsschlupfes $\Delta n$ auf. Mittels eines Summierers 36 wird die Differenz zwischen dem Soll-Kupplungsschlupf $\Delta n^*$ und dem mittels des Filters 31 gefilterten Kupplungsschlupfes $\Delta n$ gebildet. Diese Differenz wird mittels eines Negierers 32 negiert und ist Eingangsgröße in einen Regler 33, der in vorteilhafter Ausgestaltung als PID-Regler ausgeführt ist. Ausgangsgröße des Reglers 33 ist ein Differenzmoment $T_R$. Das Differenzmoment $T_R$ ist Eingangsgröße in einem Minimalwertbildner 82. Der Minimalwertbildner 82 vergleicht das Differenzmoment $T_R$ und das Stoßmoment $T_S$ und gibt das größere Moment als Ausgangswert aus. Das Minimum von Differenzmoment $T_R$ und Stoßmoment $T_S$ ist Eingangsgröße in einem Auswähler 79.

Mittels eines Filters 34 wird das Motormoment $T_M$ gefiltert und mittels eines Multiplizierers 90 mit der Übersetzung i des Automatikgetriebes 2 multipliziert. Das so gefilterte und mit der Übersetzung i des Automatikgetriebes 2 multiplizierte Motormoment $T_M$ wird einem Auswähler 79 zugeführt.

Es ist weiterhin ein Temperaturmodell 78 zur Berechnung der Temperatur $\vartheta_{SL}$ der Stahllamellen der Kupplung 3 vorgesehen. In beispielhafter Ausgestaltung ist der Zusammenhang

$$\vartheta_{SL}(t_n) = \vartheta_{OIL}(t_n) - \int \left( \frac{\pi}{15 \cdot z_R \cdot m_{SL} \cdot c_{SL}} \cdot \left| T_K(t) \cdot (n_E(t_n) - n_A(t_n)) \right| \right.$$

$$\left. - \alpha \frac{2A_R}{m_{SL} \cdot c_{SL}} (\vartheta_{SL}(t_{n-1}) - \vartheta_{SL}(t_n)) \right) dt$$

in dem Temperaturmodell 78 implementiert. Dabei ist

$\vartheta_{SL}$      die Temperatur der Stahllamellen

$\vartheta_{OIL}$ die Temperatur des Hydrauliköls
$A_R$ die Reibfläche der Stahllamellen
$Z_R$ die Anzahl der Reibflächen
$m_{SL}$ die Masse der Stahllamellen
$C_{SL}$ die Wärmekapazität der Stahllamellen
$t_n$ den aktuelle Zeitpunkt
$\alpha$ die Wärmeübergangszahl

Die so errechnete Temperatur $\vartheta_{SL}$ der Stahllamellen der Kupplung 3 ist Eingangsgröße in den Auswähler 79. Ausgangsgröße des Auswählers 79 ist das von der Kupplung 3 zu übertragende Kupplungsmoment $T_K$, das zusammen mit dem Reibekoeffizienten $\mu$ Eingangswert in ein inverses Kupplungsmodell 35 ist.

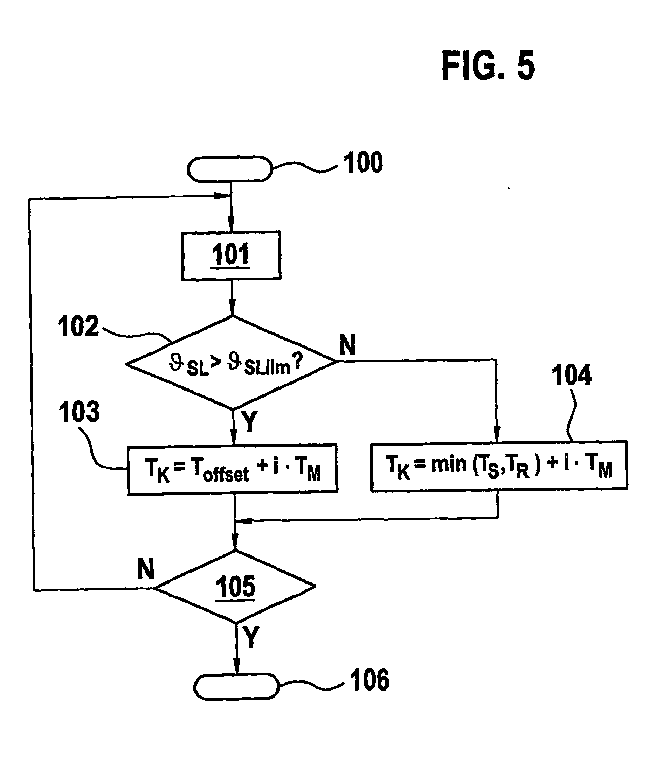

Figur 5 zeigt einen Ablaufplan, der in vorteilhafter Ausgestaltung auf dem Auswähler 79 implementiert ist. Dem Beginn des Ablaufs 100 folgt ein Schritt 101, in dem die Temperatur $\vartheta_{SL}$ der Stahllamellen der Kupplung 3 eingelesen wird. Dem Schritt 101 folgt eine Abfrage 102 in der abgefragt wird, ob

$$\vartheta_{SL} > \vartheta_{SLlim}$$

wobei $\vartheta_{SLlim}$ ein Schwellenwert für Temperatur $\vartheta_{SL}$ der Stahllamellen der Kupplung 3 ist. Ist die Bedingung

$$\vartheta_{SL} > \vartheta_{SLlim}$$

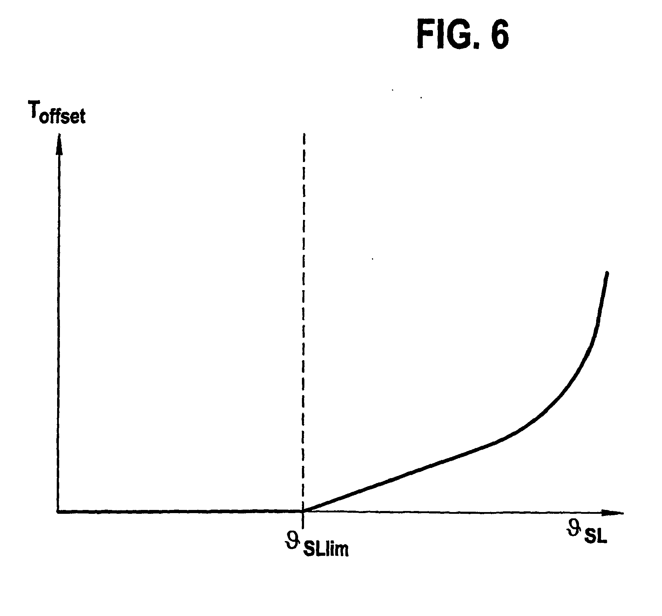

erfüllt, so folgt der Abfrage 102 ein Schritt 103, in dem das von der Kupplung zu 3 zu übertragende Kupplungsmoment $T_K$ gemäß

$$T_K = T_{offset} + i \cdot T_M$$

berechnet wird, wobei $T_{offset}$ z. B. gemäß einem Zusammenhang bestimmt wird, wie er beispielhaft in Fig. 6 dargestellt ist.

Ist die Bedingung

$$\vartheta_{SL} > \vartheta_{SLlim}$$

dagegen nicht erfüllt, so folgt der Abfrage 102 ein Schritt 104, in dem das von der Kupplung 3 zu übertragende Kupplungsmoment $T_K$ gemäß

$$T_K = \min(T_S, T_R) + i \cdot T_M,$$

berechnet wird.

Den Schritten 103 bzw. 104 folgt eine Abfrage 105, in der abgefragt wird, ob die Bestimmung des von der Kupplung 3 zu übertragende Kupplungsmomentes $T_K$ in Abhängigkeit der Temperatur der Kupplung 3 beendet werden soll. Ist dies nicht der Fall, so folgt der Abfrage 105 der Schritt 101. Ist es dagegen der Fall, so folgt der Abfrage 105 das Ende 106 des Ablaufs

Im inversen Kupplungsmodel 35 ist in beispielhafter Ausgestaltung folgende Gleichung implementiert:

$$p^* = \frac{1}{A_R}\left(\frac{T_K}{\mu \cdot r \cdot Z_R} + F_0\right)$$

Dabei ist A die Kolbenfläche der Kupplung 3, r der effektive Reibradius der Kupplung 3, $Z_R$ die Anzahl der Reibflächen der Kupplung 3 und $F_0$ die minimal notwendige Kraft zur Drehmomentübertragung mittels der Kupplung 3.

Fig. 7 zeigt einen Ablaufplan, als Implementierung des Adaptierers 22. Dabei bezeichnet Bezugzeichen 40 den Anfang des Ablaufs und Bezugzeichen 49 das Ende des Ablaufs. In einem Schritt 41 werden die Information $T_M$ über das Motormoment, die Information $\Delta T_M$ über die Ungenauigkeit der Information über das Motormoment $T_M$, das Differenzmoment $T_R$, der Soll-Kupplungsschlupf $\Delta n^*$ und der Anpreßdruck p eingelesen.

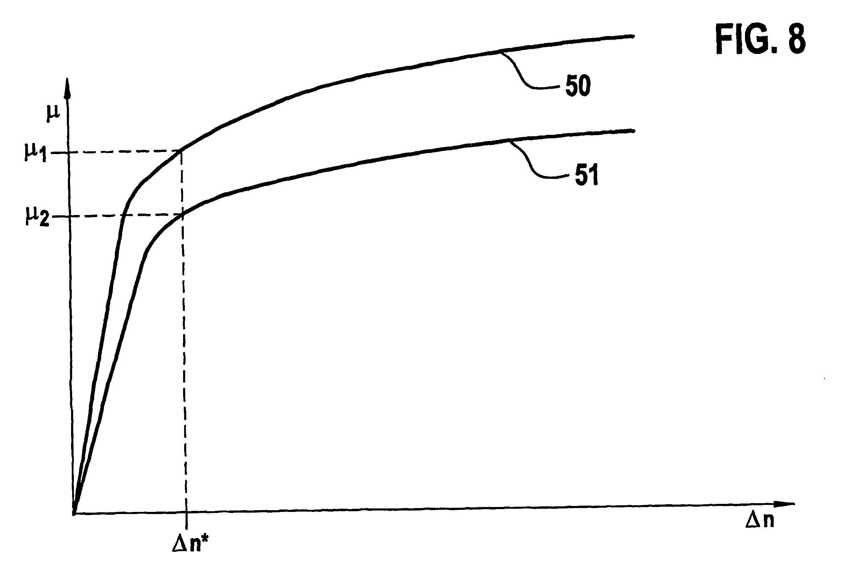

In einem nächsten Schritt 42 wird ein Reibkoeffizient $\mu$ aus dem Soll-Kupplungsschlupf $\Delta n^*$ und dem Anpreßdruck p gebildet. Dies erfolgt in vorteilhafter Ausgestaltung mittels einer vom Anpreßdruck p abhängigen Reibkoeffizient-Schlupf-Kennlinie. Eine solche Kennlinie ist beispielhaft in Fig. 8 dargestellt und mit Bezugzeichen 50 bezeichnet.

Dem Schritt 42 folgt die Abfrage 43 in der abgefragt wird, ob

$$\Delta T_M \leq T_1$$

wobei $T_1$ ein (erster) Toleranzwert ist. Ist

$$\Delta T_M \leq T_1$$

so folgt ein Schritt 44, in dem ein neuer Reibkoeffizient $\mu$ der Kupplung gemäß

$$\mu = \mu + \frac{T_M \cdot i}{T_M \cdot i + T_R}$$

sowie ein korrigiertes Motormoment $T_{MK}$ gemäß

$$T_{MK} = T_M$$

gebildet wird.

Dem Schritt 44 folgt ein Schritt 45 in dem die vom anpreßdruckabhängigen Reibkoeffizient-Schlupf-Kennlinie 50 derart verändert wird, daß der neue Wert für den Reibkoeffizient $\mu$ und der Soll-Kupplungsschlupf $\Delta n^*$ ein Wertepaar auf der veränderten Reibkoeffizient-Schlupf-Kennlinie 51 bilden. Schritt 45 wird durch Fig. 8 verdeutlicht. Dabei bezeichnet $\mu_1$ den Wert für den Reibkoeffizienten $\mu$ für den gültigen Anpreßdruck vor Ausführung des Schritts 45 und $\mu_2$ den Wert des Reibkoeffizienten $\mu$ für den gültigen Anpreßdruck nach Ausführung des Schritts 45. Der Reibkoeffizient $\mu_1$ wird mittels der Kennlinie 50 in Abhängigkeit des Soll-Kupplungsschlupfes $\Delta n^*$ gebildet (siehe Schritt 42). Im Schritt 45 wird in die Reibkoeffizient-Kupplungsschlupf-Kennlinie 50 so verändert, daß sich eine Reibkoeffizient-Kupplungsschlupf-Kennlinie 51 ergibt, auf der der Wert $\mu_2$ und der Soll-Kupplungsschlupf $\Delta n^*$ ein Wertepaar sind.

Ist

$$\Delta T_M \leq T_1$$

nicht erfüllt, so folgt statt Schritt 44 ein Schritt 48, in dem ein korrigiertes Motormoment $T_{MK}$ gleich der Summe aus durch den Verbrennungsmotor 1 erzeugte Motormoment $T_M$ und dem durch die Übersetzung i des Automatikgetriebes 2 dividierten Differenzmoments $T_R$ gesetzt wird:

$$T_M = T_M + T_R / i$$

Dem Schritt 46 bzw. dem Schritt 48 folgt eine Abfrage 47, in der abgefragt wird, ob der vorangegangene Ablauf wiederholt werden soll. Ist dies der Fall, so folgt Schritt 41. Ist dies nicht der Fall, so wird der. Ablauf beendet.

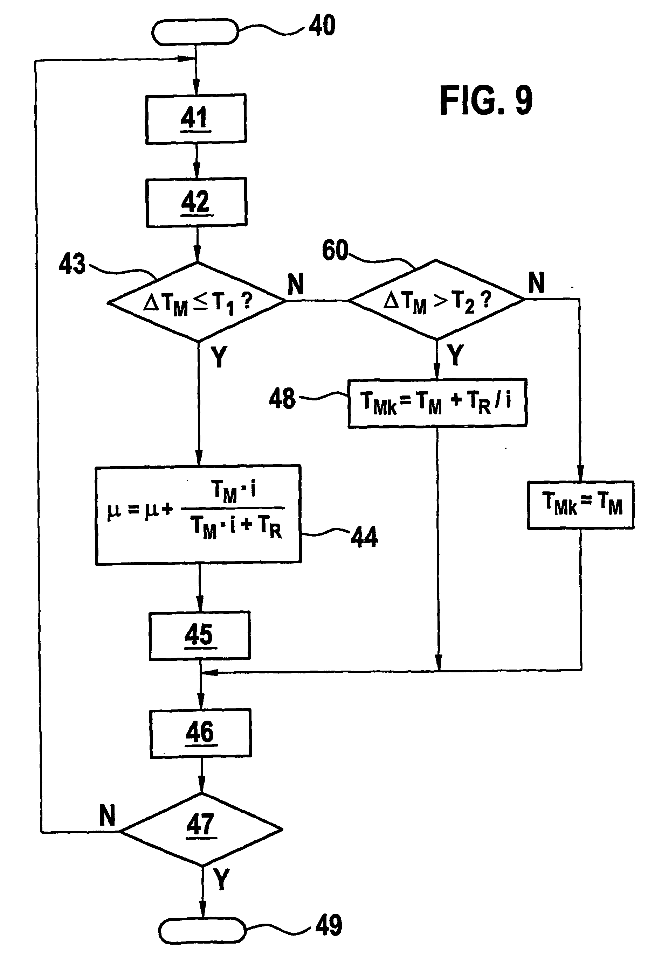

Fig.9 zeigt eine Abwandlung des Ablaufplans aus Fig. 7. Dabei folgt der Abfrage 43 nicht der Schritt 48 sondern eine Abfrage 60. Mit der Abfrage 60 wird abgefragt, ob

$$\Delta T_M > T_2$$

erfüllt ist wobei $T_2$ ein zweiter Toleranzwert ist. Ist diese Bedingung erfüllt, so folgt Schritt 48. Ist die Bedingung dagegen nicht erfüllt, erfolgt Schritt 46.

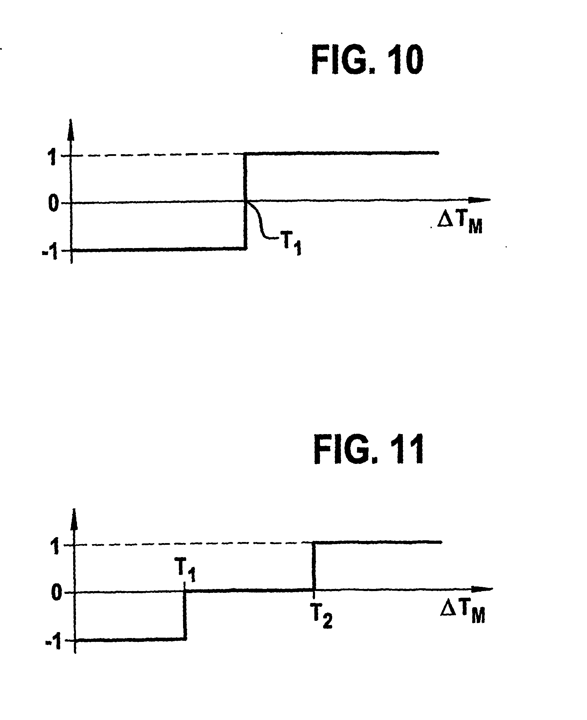

Fig. 10 und Fig. 11 verdeutlichen die Unterschiede zwischen den Ablaufplänen gemäß Fig. 7 und Fig. 9. Dabei ist auf der Abszisse die Information $\Delta T_M$ über die Ungenauigkeit der Information über das Motormoment $T_M$ des Verbrennungsmotors 1 dargestellt. Die Ordinaten in Fig. 10 und Fig. 11 geben an, welche Schritte ausgeführt werden. Dabei symbolisiert der Wert -1 die Ausführung der Schritte 44 und 45, der Wert 1 die Ausführung des Schritts 48 und der Wert 0 weder die Ausführung der Schritte 44 und 45 noch des Schritts 48. Die Abfrage 43 in Fig. 7 entspricht einem binären Schalter. Die Kombination der Abfragen 43 und 60 in Fig. 9 entspricht einem Dreipunkt-Schalter. Anstelle dieser beiden einfachen Schaltertypen sind selbstverständlich auch komplizierterer Schaltvorgänge, wie etwa fließende Übergänge, die z.B. durch Fuzzy-Techniken ausgeführt werden können, denkbar.

Bezugszeichenliste

| | |
|---|---|
| 1 | Motor |
| 2 | Automatikgetriebe |
| 3 | Kupplung |
| 4 | Welle |
| 5 | Kupplungs-Eingangswelle |
| 6 | Kupplungs-Ausgangswelle |
| 7 | Differential |
| 8, 9 | Antriebsräder |
| 10, 11 | Drehzahlsensoren |
| 12 | Kupplungssteuerung |
| 20 | Differenzbildner |
| 21 | Druckregler |
| 22 | Adaptierer |
| 31, 34 | Filter |
| 32 | Negierer |
| 33 | Regler |
| 35 | inverses Kupplungsmodell |
| 36 | Summierer |
| 40, 100 | Anfang des Ablaufs |
| 41, 42, 44, 45, 46, 48, 101, 103, 104 | Schritt |
| 43, 47, 60, 102, 105 | Abfrage |
| 49 | Ende des Ablaufs |
| 50, 51 | Reibkoeffizient-Schlupf-Kennlinie |

| | |
|---|---|
| 78 | Temperaturmodell |
| 79 | Auswähler |
| | |
| 81 | Schutzeinrichtung |
| 82 | Minimalwertbildner |
| 83 | Schmierölzuführung |
| 84 | Außenmitnehmer |
| 85 | Innenmitnehmer |
| 86 | Außenlamelle |
| 87 | Innenlamelle |
| 88 | Rückholfeder |
| 90 | Multiplizierer |
| 93 | Zylinder |
| 94 | Kolben |
| 95 | Druckplatte |
| 96 | Druckmittelzuführung |
| | |
| $n_E$ | Drehzahl der Kupplungs-Eingangswelle |
| $n_A$ | Drehzahl der Kupplungs-Ausgangswelle |
| $T_M$ | Information über das Motormoment |
| $\Delta T_M$ | Ungenauigkeit der Information über das Motormoment |
| $T_R$ | Differenzmoment (Reglerausgang) |
| $T_k$ | Kupplungsmoment |
| $T_1$ | erster Toleranzwert |
| $T_2$ | zweiter Toleranzwert |
| $\Delta n$ | Kupplungsschlupf |
| $\Delta n^*$ | Soll-Kupplungsschlupf |
| $i$ | Übersetzung des Getriebes |
| $p$ | Anpreßdruck |
| $p^*$ | Soll-Anpreßdruck |
| $\mu, \mu_1, \mu_2$ | Reibkoeffizient |
| $J_1$ | Trägheitsmoment des Antriebsaggregats auf der Seite der Kupplung 1, auf der der Verbrennungsmotor angeordnet ist. |
| $\Delta n_{max}$ | maximal zulässige Kupplungsschlupf |
| $T_c$ | konstantes Moment |
| $\Delta t$ | Zeitdauer, in der ein Momentenstoß zu einer Erhöhung des Schlupfes führt |
| $\vartheta_{SL}$ | Temperatur der Stahllamellen der Kupplung |
| $\vartheta_{SLlim}$ | Schwellenwert für die Temperatur der Stahllamellen der Kupplung |
| $\vartheta_{OIL}$ | Temperatur des Hydrauliköls |
| $A_R$ | Reibfläche der Stahllamellen der Kupplung |
| $Z_R$ | Anzahl der Reibflächen der Kupplung |
| $m_{SL}$ | Masse der Stahllamellen der Kupplung |
| $C_{SL}$ | Wärmekapazität der Stahllamellen der Kupplung |
| $t_n$ | aktueller Zeitpunkt |
| $\alpha$ | Wärmeübergangszahl |
| | |
| $F_0$ | minimal notwendige Kraft zur Drehmomentübertragung mittels der Kupplung |
| $T_S$ | Stoßmoment |
| $T_{offset}$ | *keine Bezeichnung* |

**Patentansprüche**

**1.** Verfahren zum Betrieb einer Kupplung (3) zwischen einem Verbrennungsmotor (1) und zumindest einem Antriebsrad (8, 9) eines Fahrzeugs, wobei durch Zusammenpressen der Kupplung (3) mit einer Anpresskraft oder einem Anpressdruck (p) ein Moment zwischen dem Verbrennungsmotor (1) und dem Antriebsrad (8, 9) übertragen wird und die Anpresskraft oder der Anpressdruck (p) in Abhängigkeit von der Temperatur der Kupplung (3) gesteuert oder geregelt wird, **dadurch gekennzeichnet, dass** die Anpresskraft oder der Anpressdruck (p) in Abhängigkeit von

einer Temperatur ($\vartheta_{SL}$) einer Reibfläche der Kupplung (3) gesteuert oder geregelt wird und dass die Temperatur der Reibfläche der Kupplung mittels eines Temperaturmodells, in dem eine mathematische Beziehung zwischen der zu berechnenden Temperatur der Reibflächen der Kupplung und anderen Parametern, insbesondere einer erfassten Temperatur ($\vartheta_{OIL}$) von Öl zur Schmierung oder Kühlung der Kupplung implementiert ist, berechnet wird.

2. Verfahren nach Anspruch 1,
   **dadurch gekennzeichnet,**
   **daß** das zu übertragende Moment zwischen dem Verbrennungsmotor (1) und dem Antriebsrad (8, 9) um einen vorgegebenen Wert erhöht wird, wenn die Temperatur einer Reibfläche der Kupplung (3) über einem Schwellenwert liegt.

3. Verfahren nach Anspruch 1, oder 2,
   **dadurch gekennzeichnet,**
   **daß** die Anpreßkraft oder der Anpreßdruck (p) in Abhängigkeit eines Kupplungsschlupfes in der Kupplung (3) bei Übertragung des Momentes zwischen dem Verbrennungsmotor (1) und dem Antriebsrad (8, 9) und einem Soll-Kupplungsschlupf geregelt wird, insbesondere wenn die Temperatur einer Reibfläche der Kupplung (3) kleiner oder gleich dem Schwellenwert ist.

4. Verfahren nach einem der vorhergehenden Ansprüche,
   **dadurch gekennzeichnet,**
   **daß** die Anpreßkraft oder der Anpreßdruck (p) in Abhängigkeit der Differenz zwischen dem Kupplungsschlupf und dem Soll-Kupplungsschlupf geregelt wird, insbesondere wenn die Temperatur einer Reibfläche der Kupplung (3) kleiner oder gleich dem Schwellenwert ist.

5. Verfahren nach einem der vorhergehenden Ansprüche,
   **dadurch gekennzeichnet,**
   **daß** die Anpreßkraft oder der Anpreßdruck (p) mittels eines inversen Kupplungsmodells geregelt wird, das die Anpreßkraft oder den Anpreßdruck (p) in Abhängigkeit des über die Kupplung (3) übertragenen Momentes errechnet.

6. Einrichtung zum Betrieb einer Kupplung (3) zwischen einem Verbrennungsmotor (1) und zumindest einem Antriebsrad (8, 9) eines Fahrzeugs, wobei durch Zusammenpressen der Kupplung (3) mit einer Anpresskraft oder einem Anpressdruck (p) ein Moment zwischen dem Verbrennungsmotor (1) und dem Antriebsrad (8, 9) übertragen wird und ein Druckregler (21) zur Steuerung oder Regelung der Anpresskraft oder des Anpressdrucks (p) in Abhängigkeit von der Temperatur der Kupplung (3) vorgesehen ist, **dadurch gekennzeichnet, dass** die Anpresskraft oder der Anpressdruck (p) in Abhängigkeit von einer Temperatur ($\vartheta_{SL}$) einer Reibfläche der Kupplung (3) gesteuert oder geregelt wird und dass Mittel vorgesehen sind, die Temperatur der Reibfläche der Kupplung mittels eines Temperaturmodells, in dem eine mathematische Beziehung zwischen der zu berechnenden Temperatur der Reibflächen der Kupplung und anderen erfassten Parametern, insbesondere einer erfassten Temperatur ($\vartheta_{OIL}$) von Öl zur Schmierung oder Kühlung der Kupplung implementiert ist, zu berechnen.

7. Einrichtung nach Anspruch 6,
   **dadurch gekennzeichnet,**
   **daß** der Druckregler (21) einen Regler zur Regelung der Anpreßkraft oder des Anpreßdrucks (p) in Abhängigkeit eines Kupplungsschlupfes in der Kupplung (3) bei Übertragung des Momentes zwischen dem Verbrennungsmotor (1) und dem Antriebsrad (8, 9) und einem Soll-Kupplungsschlupf ausweist.

8. Einrichtung nach Anspruch 6 oder 7,
   **dadurch gekennzeichnet,**
   **daß** der Druckregler (21) ein inverses Kupplungsmodell zur Errechnung der Anpreßkraft oder des Anpreßdrucks (p) in Abhängigkeit des über die Kupplung (3) übertragenen Momentes aufweist.

9. Einrichtung nach Anspruch 8,
   **dadurch gekennzeichnet,**
   **daß** der Reibkoeffizient ($\mu$) der Kupplung (3) ein Parameter des inversen Kupplungsmodells ist.

10. Einrichtung nach Anspruch 9,
    **dadurch gekennzeichnet,**
    **daß** sie einen Adaptierer zur Adaption des Reibkoeffizienten ($\mu$) der Kupplung (3) aufweist.

**11.** Einrichtung nach einem der Ansprüche 6 bis 10,
**dadurch gekennzeichnet,**
**daß** Druckregler (21) einen Auswähler zur, insbesondere von der Temperatur einer Reibfläche der Kupplung (3) abhängigen, Entscheidung, ob die Anpreßkraft oder der Anpreßdruck (p) unabhängig vom Kupplungsschlupf in der Kupplung (3) ermittelt wird, aufweist.

**Claims**

**1.** Method for operating a clutch (3) between an internal combustion engine (1) and at least one drive wheel (8, 9) of a vehicle, a torque being transmitted between the internal combustion engine (1) and the drive wheel (8, 9) by the clutch (3) being pressed together with a pressing force or a pressing pressure (p), and the pressing force or the pressing pressure (p) being controlled or regulated as a function of the temperature of the clutch (3), **characterized in that** the pressing force or the pressing pressure (p) is controlled or regulated as a function of a temperature ($\theta_{SL}$) of a friction face of the clutch (3), and **in that** the temperature of the friction face of the clutch is calculated by means of a temperature model, in which a mathematical equation is implemented between the temperature to be calculated of the friction faces of the clutch and other parameters, in particular a sensed temperature ($\theta_{OIL}$) of oil for lubricating or cooling the clutch.

**2.** Method according to Claim 1, **characterized in that** the torque which is to be transmitted between the internal combustion engine (1) and the drive wheel (8, 9) is increased by a predefined value if the temperature of a friction face of the clutch (3) lies above a threshold value.

**3.** Method according to Claim 1 or 2, **characterized in that** the pressing force or the pressing pressure (p) is regulated as a function of a clutch slip in the clutch (3) when the torque is being transmitted between the internal combustion engine (1) and the drive wheel (8, 9) and a setpoint clutch slip, in particular if the temperature of a friction face of the clutch (3) is smaller than or equal to the threshold value.

**4.** Method according to one of the preceding claims, **characterized in that** the pressing force or the pressing pressure (p) is regulated as a function of the difference between the clutch slip and the setpoint clutch slip, in particular if the temperature of a friction face of the clutch (3) is smaller than or equal to the threshold value.

**5.** Method according to one of the preceding claims, **characterized in that** the pressing force or the pressing pressure (p) is regulated by means of an inverse clutch model which calculates the pressing force or the pressing pressure (p) as a function of the torque which is transmitted via the clutch (3).

**6.** Device for operating a clutch (3) between an internal combustion engine (1) and at least one drive wheel (8, 9) of a vehicle, a torque being transmitted between the internal combustion engine (1) and the drive wheel (8, 9) by the clutch (3) being pressed together with a pressing force or a pressing pressure (p), and a pressure regulator (21) being provided to control or regulate the pressing force or the pressing pressure (p) as a function of the temperature of the clutch (3), **characterized in that** the pressing force or the pressing pressure (p) is controlled or regulated as a function of a temperature ($\theta_{SL}$) of a friction face of the clutch (3), and **in that** means are provided to calculate the temperature of the friction face of the clutch by means of a temperature model, in which a mathematical equation is implemented between the temperature to be calculated of the friction faces of the clutch and other sensed parameters, in particular a sensed temperature ($\theta_{OIL}$) of oil for lubricating or cooling the clutch.

**7.** Device according to Claim 6, **characterized in that** the pressure regulator (21) has a regulator for regulating the pressing force or the pressing pressure (p) as a function of a clutch slip in the clutch (3) when the torque is being transmitted between the internal combustion engine (1) and the drive wheel (8, 9) and a setpoint clutch slip.

**8.** Device according to Claim 6 or 7, **characterized in that** the pressure regulator (21) has an inverse clutch model for calculating the pressing force or the pressing pressure (p) as a function of the torque which is transmitted via the clutch (3).

**9.** Device according to Claim 8, **characterized in that** the coefficient of friction ($\mu$) of the clutch (3) is a parameter of the inverse clutch model.

**10.** Device according to Claim 9, **characterized in that** it has an adaptor for adapting the coefficient of friction ($\mu$) of

the clutch (3).

11. Device according to one of Claims 6 to 10, **characterized in that** the pressure regulator (21) has a choice unit for the decision, which is dependent, in particular, on the temperature of a friction face of the clutch (3), as to whether the pressing force or the pressing pressure (p) is determined independently of the clutch slip in the clutch (3).

**Revendications**

1. Procédé pour faire fonctionner un embrayage (3) entre un moteur à combustion interne (1) et au moins une roue motrice (8, 9) d'un véhicule, selon lequel un couple est transmis entre le moteur à combustion interne (1) et la roue motrice (8, 9) par la compression de l'embrayage (3) avec une force d'appui ou une pression d'appui (p), et la force d'appui ou la pression d'appui (p) est commandée ou régulée en fonction de la température de l'embrayage (3), **caractérisé en ce que**
la force d'appui ou la pression d'appui (p) est commandée ou régulée en fonction d'une température ($\theta_{SL}$) d'une surface de friction de l'embrayage (3), et la température de la surface de friction de l'embrayage est calculée au moyen d'un modèle de température dans lequel est implémentée une relation mathématique entre la température des surfaces de friction de l'embrayage à calculer et d'autres paramètres, notamment d'une température détectée ($\theta_{OIL}$) d'huile pour la lubrification ou le refroidissement de l'embrayage.

2. Procédé selon la revendication 1,
**caractérisé en ce que**
le couple à transmettre entre le moteur à combustion interne (1) et la roue motrice (8, 9) est augmenté d'une valeur prédéterminée lorsque la température d'une surface de friction de l'embrayage (3) est supérieure à une valeur seuil.

3. Procédé selon la revendication 1 ou 2,
**caractérisé en ce que**
la force d'appui ou la pression d'appui (p) est régulée en fonction d'un patinage dans l'embrayage (3) lors de la transmission du couple entre le moteur à combustion interne (1) et la roue motrice (8, 9) et d'un patinage d'embrayage de consigne, en particulier lorsque la température d'une surface de friction de l'embrayage (3) est inférieure ou égale à la valeur seuil.

4. Procédé selon l'une quelconque des revendications précédentes,
**caractérisé en ce que**
la force d'appui ou la pression d'appui (p) est régulée en fonction de la différence entre le patinage d'embrayage et le patinage d'embrayage de consigne, en particulier lorsque la température d'une surface de friction de l'embrayage (3) est inférieure ou égale à la valeur seuil.

5. Procédé selon l'une quelconque des revendications précédentes,
**caractérisé en ce que**
la force d'appui ou la pression d'appui (p) est régulée au moyen d'un modèle d'embrayage inverse qui calcule la force d'appui ou la pression d'appui (p) en fonction du couple transmis par l'embrayage (3).

6. Dispositif pour faire fonctionner un embrayage (3) entre un moteur à combustion interne (1) et au moins une roue motrice (8, 9) d'un véhicule, dans lequel un couple est transmis entre le moteur à combustion interne (1) et la roue motrice (8, 9) par la compression de l'embrayage (3) avec une force d'appui ou une pression d'appui (p), et un régulateur de pression (21) est prévu pour commander ou réguler la force d'appui ou la pression d'appui (p) en fonction de la température de l'embrayage (3),
**caractérisé en ce que**
la force d'appui ou la pression d'appui (p) est commandée ou régulée en fonction d'une température ($\theta_{SL}$) d'une surface de friction de l'embrayage (3), et des moyens sont prévus pour calculer la température de la surface de friction de l'embrayage à l'aide d'un modèle de température dans lequel est implémentée une relation mathématique entre la température des surfaces de friction de l'embrayage à calculer et d'autres paramètres, notamment d'une température détectée ($\theta_{OIL}$) d'huile pour la lubrification ou le refroidissement de l'embrayage.

7. Dispositif selon la revendication 6,
**caractérisé en ce que**
le régulateur de pression (21) présente un régulateur pour réguler la force d'appui ou la pression d'appui (p) en fonction d'un patinage dans l'embrayage (3) lors de la transmission du couple entre le moteur à combustion interne (1) et la roue motrice (8, 9), et en fonction d'un patinage d'embrayage de consigne.

8. Dispositif selon la revendication 6 ou 7,
   **caractérisé en ce que**
   le régulateur de pression (21) présente un modèle d'embrayage inverse pour calculer la force d'appui ou la pression d'appui (p) en fonction du couple transmis par l'embrayage (3).

9. Dispositif selon la revendication 8,
   **caractérisé en ce que**
   le coefficient de friction ($\mu$) de l'embrayage (3) est un paramètre du modèle d'embrayage inverse.

10. Dispositif selon la revendication 9,
    **caractérisé en ce qu'**
    il présente un adaptateur pour adapter le coefficient de friction ($\mu$) de l'embrayage (3).

11. Dispositif selon l'une quelconque des revendications 6 à 10,
    **caractérisé en ce que**
    le régulateur de pression (21) présente un sélecteur pour décider, notamment en fonction de la température d'une surface de friction de l'embrayage (3), si la force d'appui ou la pression d'appui (p) est déterminée indépendamment du patinage dans l'embrayage (3).

**FIG. 1**

EP 1 320 697 B1

FIG. 2

93 94 96 87 84 86 95 85 88 83 6 5

# FIG. 3

# FIG. 4

EP 1 320 697 B1

## FIG. 5

# FIG. 6

**FIG. 7**

40

41

42

43 $\Delta T_M \leq T_1$ ? N

Y

48 $T_{Mk} = T_M + T_R / i$

$\mu = \mu + \dfrac{T_M \cdot i}{T_M \cdot i + T_R}$ 44

$T_{Mk} = T_M$

45

46

47 Y

N

49

FIG. 8

EP 1 320 697 B1

**FIG. 9**

$$\mu = \mu + \frac{T_M \cdot i}{T_M \cdot i + T_R}$$

$$T_{Mk} = T_M + T_R / i$$

$$T_{Mk} = T_M$$

$$\Delta T_M \leq T_1 \,?$$

$$\Delta T_M > T_2 \,?$$

# FIG. 10

# FIG. 11